Europäisches Patentamt

European Patent Office

Office européen des brevets

(11) Publication number: 0 513 897 A1

# EUROPEAN PATENT APPLICATION

(21) Application number: 92201242.2

(22) Date of filing: 04.05.92

(51) Int. Cl.5: **B60S 1/18, B60S 1/58**

(30) Priority: 17.05.91 GB 9110676

(43) Date of publication of application:
19.11.92 Bulletin 92/47

(84) Designated Contracting States:
DE ES FR IT

(71) Applicant: DELCO CHASSIS OVERSEAS
CORPORATION
3044 West Grand Boulevard
Detroit Michigan 48202(US)

(72) Inventor: Gower, Michael J.
6 Butely Road
Luton, Bedfordshire LU4 9HE(GB)

(74) Representative: Haines, Arthur Donald et al
Patent Section 1st Floor Gideon House 28
Chapel Street
Luton, Bedfordshire LU1 2SE(GB)

(54) Window wiper system with depressed park mechanism.

(57) A window wiper system (10) with a depressed
park mechanism consists of: a reversible electric
motor driving an output drive member (12); an ec-
centric cam member (34) pivotally mounted on the
drive member (12); a sector link (50) pivotally con-
nected at one end to the cam member (34), held in
place by a resilient biasing means, and at its other
end engaging a wiper drive shaft. When the drive
member (12) is rotated in a clockwise sense an
abutment (44) on the cam member (34) is held
against a cam stop (19) provided on the drive mem-
ber (12). No relative movement between the cam
(34) and the drive member (12) is possible and the
sector link (50) reciprocates through a circular arc
corresponding to the desired wipe pattern. On re-
versing the drive, the cam (34) rotates relative to the
drive member (12). The offset between the drive
member axis and cam/sector link pivot axis (40)
increases until the cam stop (19) abuts against a
second abutment (44) on the cam (34). This in-
creased offset forces the sector link (50) into a larger
circular arc, driving the wiper blade into its de-
pressed parking position.

Fig.2.

This invention relates to window wiper systems for use on motor vehicles, and, in particular, relates to window wiper systems including depressed park mechanisms which are called into operation when it is desired to park the window wipers, and operate to produce extended arcs of wipe of the wipers so that said wipers are parked in predetermined positions relative to windows, such as windscreens or rear windows, of the motor vehicles, as specified in the preamble of claim 1, for example as disclosed in US-A-3,665,772.

Window wiper systems with depressed park mechanisms are well-known in the prior art for use in motor vehicles in order to ensure that wiper blades on wiper arms driven by such systems are placed in parked positions in which they are positioned off, but adjacent to, the window surfaces to be wiped, preferably out of the line-of-sight of a driver of such motor vehicles. Known window wiper systems with depressed park mechanisms commonly use a reversible electric motor which is driven in reverse through 180° or less in order to activate some form of cam mechanism which produces a lengthening of the stroke of a crank mechanism of the system in order to achieve the desired extended arc of wipe of the wiper or wipers driven by the system. Because of the need to ensure that this lengthening of the stroke of the crank mechanism only occurs as the wiper or wipers involved move towards the parking positions thereof, and is eliminated as soon as the wiper or wipers move away from said parking positions when the system is next actuated, many of these prior-art window wiper systems with depressed park mechanisms are extremely complicated in construction with many moving parts, they are expensive to manufacture and assemble, and they tend to be noisy and subject to wear during operation, and thus do not possess long service lives.

An improved window wiper system with a depressed park mechanism according to the present invention is characterised by the features specified in the characterising portion of claim 1.

A preferred embodiment of the present invention, for use in operating a single wiper arm provided with a single wiper blade, is one in which an output drive member, an eccentric cam member and a sector link are all housed within a gearbox of the window wiper system.

Advantageously, an output drive linkage of the present invention includes intermeshing gear sectors which multiply the reciprocating movement of the output drive linkage.

Preferably, the output drive member is a gear wheel forming part of an output gear train of the reversible electric motor in this preferred embodiment of the invention, and a cam stop member is positioned on the axis of rotation of the output drive member.

A resilient biasing means on the pivot connection between the eccentric cam member and the sector link of the preferred embodiment of the invention preferably comprises a spring washer, which spring washer advantageously comprises a multi-fingered spring washer formed with a plurality of radially-extending spring fingers, such as eight of said radially-extending spring fingers, which provide the resilient bias required between the eccentric cam member and the sector link.

In the preferred embodiment of the present invention, which advantageously can be a rear window wiper system for use on a rear window of a motor vehicle, the eccentric cam member is preferably pivotally mounted on the output drive member by a pin-and-socket connection, the pivotal connection between the eccentric cam member and the sector link is a pin-and-socket connection, and the resilient biasing means is retained in position between the eccentric cam member and the sector link by means of a hammer drive screw secured in the pin of said pin-and-socket connection.

The invention and how it may be performed are hereinafter particularly described with reference to the accompanying drawings, in which:

Figure 1 shows a side view, partly in cross-section, of a preferred embodiment of a window wiper system with depressed park mechanism for use on a rear window of a motor vehicle;

Figure 2 shows an isometric, exploded view of the major components of the system disclosed in Figure 1;

Figure 3 shows a plan view of an eccentric cam member used in the system shown in Figure 1;

Figure 4 shows a side view of the eccentric cam member shown in Figure 3; and

Figures 5a - 5f are schematic plan views of a portion of the system shown in Figure 1, which demonstrate the parking sequence of operation of the system shown in Figure 1.

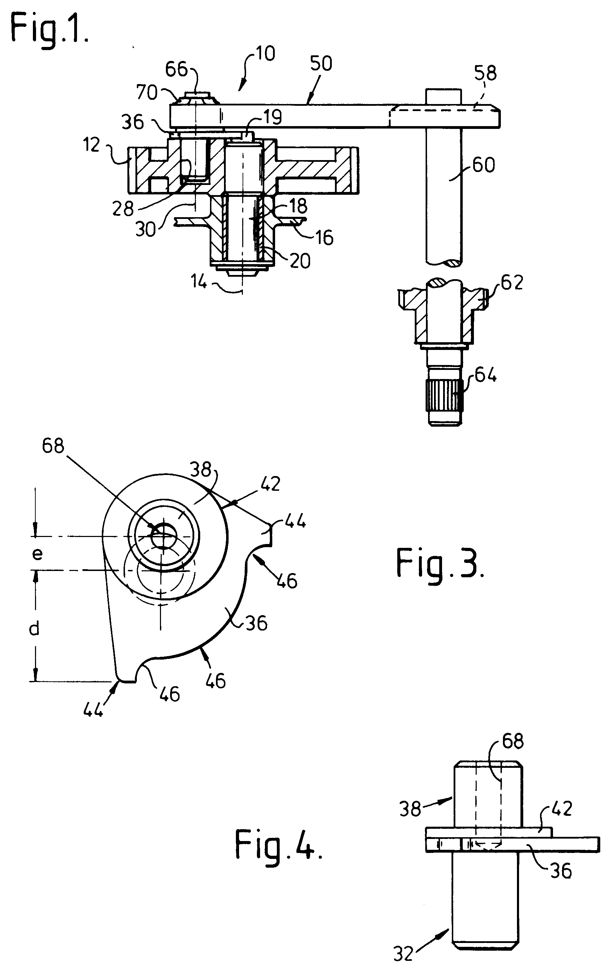

Referring now to Figures 1 and 2, a window wiper system 10 is disclosed which includes an output drive member 12 in the form of a gearwheel which is rotatably driven by a rotatable output shaft (not shown) of an output gear train of a reversible electric motor (not shown). The output drive member 12 is supported for rotation about an axis of rotation 14 in a gearbox housing 16, shown in fragmented cross-section in Figure 1, by means of a central pivot shaft 18 which is secured to the centre of the output drive member 12 and rotates within a sleeve bearing 20 formed within the gearbox housing 16.

The central pivot shaft 18 is secured within a bore 22 of a central abutment 24 of the output drive member 12, and has a co-axial cylindrical end portion 19 which protrudes from an upper, substantially planar surface 26 of the central abutment 24. The co-axial cylindrical end portion 19 has a radius of curvature r, and forms a cam stop member for the wiper system 10. A smooth-sided cylindrical bore 28, the longitudinal axis 30 of which is parallel to, and spaced from the axis of rotation 14 of the output drive member 12, opens into the upper, substantially planar surface 26 of the central abutment 24. Pivotally housed within the cylindrical bore 28 is a first cylindrical pin portion 32 of an eccentric cam member 34, to form a first pin-and-socket connection, the longitudinal axis of which cylindrical pin portion 32 is positioned at right angles to a shaped, substantially planar portion 36 of the eccentric cam member 34. The eccentric cam member 34 is completed by a second cylindrical pin portion 38, the longitudinal axis 40 of which is positioned at right angles to the planar portion 36. The second cylindrical pin portion 38 extends from a cylindrical boss 42 on the planar portion 36 in a direction directly opposite to that of the first cylindrical pin portion 32. The longitudinal axis 40 of the second pin portion 38 is parallel to the longitudinal axis of the first pin portion 32, but is offset therefrom, and therefore from the longitudinal axis 30 of the bore 28, by a predetermined amount e (see Figure 3) which governs the extent of the throw, i.e., the lateral displacement effected by the eccentric cam member 34 on other elements of the wiper system 10 during rotation of the eccentric cam member 34 in bore 28, as will be described in more detail hereinafter.

As can be seen with reference to Figures 3 and 4 of the drawings, the cylindrical boss 42 of the planar portion 36 is asymmetrically located on the planar portion 36, and the perimeter of the planar portion 36 is provided with a pair of engagement abutments 44, each one of which is positioned at the same distance d from the longitudinal axis of the first cylindrical pin portion 32 as is the other engagement abutment 44. The distance d is equivalent to the distance by which the longitudinal axis 30 of the cylindrical bore 28 is spaced from the axis of rotation 14 of the output drive member 12. The pair of engagement abutments 44, in this preferred embodiment of the invention, extend approximately at 90° to one another in the plane of the planar portion 36, and the perimeter of the planar portion 36 between the engagement abutments is formed with a sinuous shape made up of similar concave arcuate portions 46 positioned at the respective engagement abutments 44 and an interconnecting convex portion 48. Each of the concave arcuate portions 46 has substantially the same radius of curvature r as the cylindrical end portion 19 of the central pivot shaft 18. The radius of curvature of the interconnecting convex portion 48, measured from the longitudinal axis of the first cylindrical pin portion 32, is slightly less than the difference (d-r) between the distance d of each abutment 44 from the longitudinal axis of the first cylindrical pin portion 32 and the radius of curvature r of the cylindrical end portion 19 of the central pivot shaft 18.

As can be seen in Figure 2, a sector link 50 of the wiper system 10 is formed at one end thereof with a cylindrical through bore 52, which pivotally houses therein the second cylindrical pin portion 38 of the eccentric cam member 34 to form a second pin-and-socket connection, and is formed at the other end thereof with a curved gear sector 54 having a radius of curvature extending from the longitudinal axis of a cylindrical through bore 56 formed in the other end of the sector link 50. The curved gear sector 54 meshes with a curved gear sector 58 (see Figure 1) which is mounted on one end of a wiper drive shaft 60. The two curved gear sectors 54 and 58 form a movement-multiplying arrangement of the wiper system 10, and are maintained in meshing engagement with one another by means of a pair of output crank links (not shown), each of which is pivoted at one end to the sector link 50 by means of a pivot pin (not shown) secured in the through bore 56, and is pivoted at the other end thereof to said one end of the wiper drive shaft 60, the pair of output crank links sandwiching the two curved gear sectors 54 and 58 between them in a manner well-known in the prior art. This pair of output crank links, the curved gear sector 58 and the wiper drive shaft 60 form an output drive linkage of the wiper system 10. The wiper drive shaft 60 is pivotally mounted within a bearing in a pivot tower portion 62 of the gearbox housing 16, and is formed at the other end thereof with an annular splined portion 64 which is engageable with a connection end of a wiper arm (not shown).

Referring again to Figure 2, the sector link 50 is pivotally mounted upon the second cylindrical pin portion 38 of the eccentric cam member 34, and is maintained thereon by means of a hammer drive screw 66 which engages in a co-axial bore 68 in the free end of the second cylindrical pin portion 38 of the eccentric cam member 34. The hammer drive screw 66 passes through a central aperture in a multi-fingered spring washer 70 which forms a resilient biasing means on the pivot connection between the eccentric cam member 34 and the sector link 50 which exerts a predetermined resilient bias which is sufficient to prevent any rotational movement of the eccentric cam member 34 relative to the sector link 50 until either one of the concave arcuate portions 46 of the respective engagement abutments 44 of the eccentric cam member 34 engages the co-axial cylindrical end portion 19 of the central pivot shaft 18. The multi-fingered spring washer 70 shown has a total of eight radially-extending spring fingers 72 thereon, but it will be understood that any number of such fingers can be employed provided that the spring washer 70 exerts a substantially uniform spring force around the pivot connection between the eccentric cam member 34 and the sector link 50. As can be appreciated from both Figures 1 and 2, the first cylindrical pin portion 32 of the eccentric cam member 34 is pivotally mounted within the cylindrical bore 28 of the central abutment 24 of the output drive member 12 so that the co-axial cylindrical end portion 19 of the central pivot shaft 18 is located adjacent the convex portion 48, and between the engagement abutments 44, of the planar portion 36 of the eccentric cam member 34.

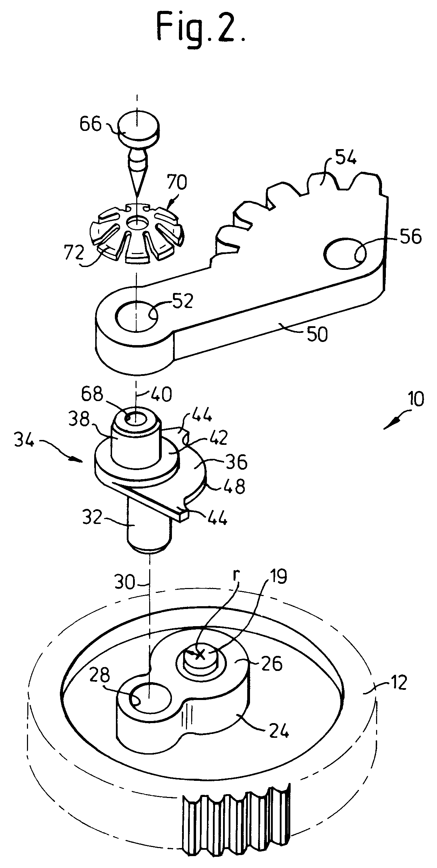

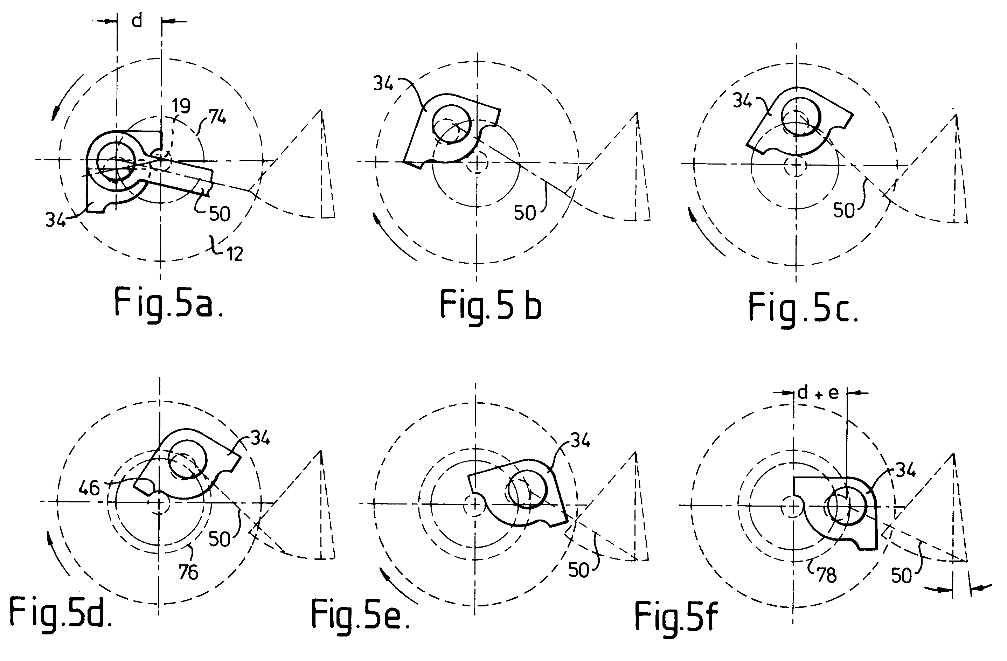

Turning now to Figures 5a to 5f of the accompanying drawings, the operation of the eccentric cam member 34 with respect to its associated components in the wiper system 10 will now be described to illustrate the manner in which the wiper system 10 operates to move a wiper blade attached thereto from an operating position to a parked position. Figure 5a is a schematic plan view of the output drive member 12, the cam stop member 19, the eccentric cam member 34 and the sector link 50 whilst the wiper system 10 is operable to reciprocate the wiper blade backwards and forwards between an inner wipe position and an outer wipe position. During the normal wiping operation of the wiper system 10, the output drive member 12 is rotating in an anti-clockwise direction as seen in Figure 5a, a first one of the engagement abutments 44 is in engagement with the cam stop member 19 and the eccentric cam member 34 is retained stationary relative to the output drive member 12. Consequently, the output drive member 12 and the eccentric cam member 34 rotate anti-clockwise together, without any pivotal movement occurring between the first cylindrical pin portion 32 of the eccentric cam member 34 and the cylindrical bore 28 of the output drive member 12. Under these circumstances, the resilient biasing force exerted by the spring washer 70 on the pivot connection between the eccentric cam member 34 and the sector link 50 is overcome, and relative rotation occurs between the eccentric cam member 34 and the sector link 50 as the output drive member 12 rotates anti-clockwise as seen in Figure 5a. Sector link 50, in conjunction with the output drive linkage of the wiper system 10, converts the rotary movement of the output drive member 12 into reciprocable motion of the wiper blade in a manner well-known in the prior art. Figure 5a illustrates the positions of the components of wiper system 10 at the outer wipe position of the wiper blade, and from which outer wipe position the parking sequence illustrated in Figures 5b to 5f is always initiated. It is to be noted in Figure 5a that the eccentric cam member 34 is positioned on the left-hand side of the cam stop member, and, what is more important, the direction of the off-set between the axis 30 of the bore 28 and the axis 40 of the second cylindrical pin portion 38 is tangential to the circle of revolution 74 traced out by the axis 30 of the bore 28 as the output drive member 12 rotates. Consequently, the pivoted connection between the eccentric cam member 34 and the sector link 50 moves in the same circle of revolution 74 to obtain the normal wiping arc of operation of the wiper system 10.

The initiation of the parking sequence for the wiper system is controlled by the manual actuation of an electrical control circuit for the reversible electric motor which includes run and parking control switches actuable by the wiper system 10 in a manner well-known in the prior art. Initiation of the parking sequence occurs from the outer wipe position shown in Figure 5a by reversing the direction of rotation of the electric motor so as to cause the output drive member 12 to rotate in a clockwise direction as shown in Figure 5b. As soon as the output drive member 12 begins to rotate clockwise, the cam stop member 19 moves out of contact with the first engagement abutment 44 of the eccentric cam member 34, as shown in Figure 5b, and the resilient biasing force exerted by the spring washer 70 on the pivot connection between the eccentric cam member 34 and the sector link 50 holds the eccentric cam member 34 stationary with respect to the sector link 50. Consequently, the eccentric cam member 34 now pivots relative to the output drive member 12 around the longitudinal axis 30 of cylindrical bore 28, as the output drive member rotates through the position shown in Figure 5c to the position shown in Figure 5d.

On reaching the position shown in Figure 5d, the cam stop member 19 of the output drive member 12 now engages the second engagement abutment 44 of the eccentric cam member 34, and the eccentric cam member 34 ceases to rotate with respect to the output drive member 12. In this position, however, it will be noted that the eccentric cam member 34 has now moved towards the right-hand side of the cam stop member 19, and the pivoted connection between the eccentric cam member 34 and the sector link 50 is now moving in a circle of revolution 76 of a larger radius than the circle of revolution 74. Once the cam stop member 19 of the output drive member 12 engages the second engagement abutment 44 of the eccentric cam member 34, the resilient biasing force exerted by the spring washer 70 on the pivot connection between the eccentric cam member 34 and the sector link 50 is overcome again, and relative rotation occurs between the eccentric cam member 34

and the sector link 50 as the output drive member 12 rotates further clockwise as seen in Figures 5e and 5f.

Figure 5f illustrates the parked position of the wiper system. When the position of the wiper system 10 shown in Figure 5f is reached, the output drive member 12 has rotated clockwise through an angle of 180°, and the reversible electric motor is stopped. During the rotation of the output drive member 12 from the position shown in Figure 5a to the position shown in Figure 5f, the eccentric cam member 34 rotates through an angle of 90° to the position shown in Figure 5f, where it is positioned on the right-hand side of cam stop member 19. It will be noted that, in this position, the direction of the off-set between the axis 30 of the bore 28 and the axis 40 of the second cylindrical pin portion 38 is now radial to the circle of revolution 74, and the pivoted connection between the eccentric cam member 34 and the sector link 50 is lying in a circle of revolution 78 of a radius that is equal to the radius of the circle of revolution 74 plus the predetermined distance between the axis 30 of the bore 28 and the axis 40 of the second cylindrical pin portion 38. This means that, in the position shown in Figure 5f, the pivoted connection between the eccentric cam member 34 and the sector link 50 has a circle of revolution 78 of a radius that is greater than the radius of the circle of revolution 74 which means, in turn, that the sector link 50, in conjunction with the output drive linkage of the wiper system 10, produces an extension to the circular arc of the wiper blade which results in the wiper blade moving to a parked position off a window surface wiped by the wiper blade.

When it is decided to use the wiper system 10 to wipe the window surface again, the reversible electric motor is manually switched on so as to rotate the output drive member 12 in an anti-clockwise direction as seen in Figure 5f. Because the resilient biasing force exerted by the spring washer 70 on the pivot connection between the eccentric cam member 34 and the sector link 50 holds the eccentric cam member 34 stationary with respect to the sector link 50, the second engagement abutment 44 of the eccentric cam member 34 moves out of contact with the cam stop member 19 and the eccentric cam member 34 now pivots relative to the output drive member 12 around the longitudinal axis 30 of cylindrical bore 28. This pivoting movement of the eccentric cam member 34 relative to the output drive member 12 continues until the cam stop member 19 of the output drive member 12 engages the first engagement abutment 44 of the eccentric cam member 34 again, and the eccentric cam member 34 ceases to rotate with respect to the output drive member 12. The wiper system 10 has now returned to the normal wipe position shown in Figure 5a, and normal wiping of the window surface by the window blade will continue all the time that the output drive member is rotated in an anti-clockwise direction as seen in Figure 5a. It should be noted that, in the movement of the wiper system 10 from the parked position shown in Figure 5f to the outer wipe position shown in Figure 5a, the pivoted connection between the eccentric cam member 34 and the sector link 50 moves smoothly from the circle of revolution 78 to the circle of revolution 74, so as to adjust the circular arc swept by the wiper blade from the extended circular arc required for parking the wiper blade to the normal circular wiping arc by the time the wiper blade first reaches the outer wipe position. This adjustment of the circular arc upon the start-up of the wiper system 10 is achieved by the time the output drive member 12 has rotated through an angle of 90° in an anti-clockwise direction.

In a specific example of the preferred embodiment of the present invention, in which the distance between the axis of rotation 14 of the output drive member 12 and the longitudinal axis 40 of the pivot connection was 11.64mm at the outer wipe position shown in Figure 5a, and the length of the sector link 50 between the bores 52 and 56 was 35mm, the distance between the axis of rotation 14 of the output drive member 12 and the longitudinal axis 40 of the pivot connection achieved at the parked position shown in Figure 5f was increased to 14.14mm to produce an additional angular movement of 7.4° at the pivoted connection between the sector link 50 and the pair of output links.

With regard to the multi-fingered spring washer 70, this can be produced from spring steel of a thickness in the range of 0.2mm to 0.5mm, to obtain a range of torque forces required to resist the rotation of the eccentric cam member 34 relative to the sector link 50.

A window wiper system with a depressed park mechanism according to the present invention employs a minimum of moving parts in an arrangement which involves minimal movement of those moving parts during the operation of the wiper system. Such a wiper system operates smoothly and quietly, in a positive manner, without any tendency to jam or to seize-up in operation. The wiper system is economical to manufacture and is simple to assemble. In particular, the preferred embodiment of the wiper system of the invention is compact in size and shape, and provides a very effective means for providing a window wiper system with a depressed park mechanism for use on a rear window of a motor vehicle, such as estate wagons and four-track fun vehicles provided with openable rear doors which are divided into an openable rear window and an openable rear door panel.

## Claims

1.   A window wiper system (10) with a depressed park mechanism, said system comprising a reversible electric motor coupled to a rotatable output shaft, an output drive member (12) rotatably driven by the output shaft, an eccentric cam member (34) pivotally mounted on said output drive member (12), and a sector link (50) pivotally connected at one end thereof to said cam member (34) and pivotally connected at another end thereof to an output drive linkage (58,60) adapted to be coupled to a wiper arm, in which system (10) the rotation of the output shaft in one direction by the reversible motor results in the reciprocation of said output drive linkage (58,60) through a circular arc corresponding to a desired wipe pattern produced on a window of a motor vehicle by a wiper blade attached to said wiper arm, and the rotation of the output shaft in the opposite direction by the reversible motor results in said output drive linkage (58,60) moving through an extended circular arc which places said wiper blade in a parked position, characterised in that, in said system (10), the axis (30) of the pivotal mounting between said eccentric cam member (34) and said output drive member (12) is parallel to, and spaced apart from the axis of rotation (14) of said output drive member (12); said output drive member (12) has a substantially planar surface (26) which is provided with a cam stop member (19) protruding therefrom which is spaced apart from said pivot axis (30) of the eccentric cam member (34); said eccentric cam member (34) has a substantially planar portion (36) thereof which extends substantially parallel to said planar surface (26) of the output drive member (12) and transverse to said pivot axis (30) of the eccentric cam member (34), and which is shaped to provide a pair of engagement abutments (44), each of which is positioned at the same distance (d) from said pivot axis (30) of the eccentric cam member (34) as is the other engagement abutment (44), and either one of which can be brought into engagement with said cam stop member (19) upon relative rotation occurring between said eccentric cam member (34) and said output drive member (12) about said pivot axis (30) of the eccentric cam member (34); said one end of the sector link (50) is pivotally connected to said eccentric cam member (34) by a pivot connection having an axis (40) that is parallel to said pivot axis (30) of the eccentric cam member (34) but is offset therefrom by a predetermined distance (e); and there is a resilient biasing means (70) provided on said pivot connection which prevents any rotational movement of said eccentric cam member (34) relative to said sector link (50) until one or the other of said engagement abutments (44) is in engagement with said cam stop member (19), yet permits said relative rotational movement between said eccentric cam member (34) and said sector link (50) to occur during all those periods when said one or the other of said engagement abutments (44) is in engagement with said cam stop member (19); the eccentric cam member (34) remaining stationary relative to said output drive member (12) during all of those periods; the geometrical positioning of said pivot connection of the sector link (50) to the eccentric cam member (34) relative to the cam stop member (19) being such that, during the rotation of the output shaft in said opposite direction, the sector link (50) is lengthened by said predetermined distance (e) so as to produce said extended circular arc of the output drive linkage (58,60) which places said wiper blade in said parked position.

2.   A window wiper system (10) according to claim 1, for use in operating a single wiper arm provided with a single wiper blade, in which the output drive member (12), the eccentric cam member (34) and the sector link (50) are all housed within a gearbox (16) of the window wiper system (10).

3.   A window wiper system (10) according to claim 2, in which the output drive linkage (58,60) includes intermeshing gear sectors (54,58) which multiply the reciprocating movement of the output drive linkage (58,60).

4.   A window wiper system (10) according to claims 2 or 3, in which the output drive member (12) is a gear wheel forming part of an output gear train of the reversible electric motor.

5.   A window wiper system (10) according to any one of claims 2 to 4, in which the cam stop member (19) is positioned on the axis of rotation (14) of the output drive member (12).

6.   A window wiper system (10) according to any one of claims 2 to 5, in which the resilient biasing means on the pivot connection comprises a spring washer (70).

7.   A window wiper system (10) according to claim 6, in which the spring washer is a multi-fingered spring washer (70) formed with a plurality of radially-extending spring fingers (72) which provide the resilient bias required between the eccentric cam member (34) and the sector link (50).

8. A window wiper system (10) according to claim 7, in which the multi-fingered spring washer (70) is formed with eight of said radially-extending spring fingers (72).

9. A window wiper system (10) according to any one of claims 2 to 8, in which the eccentric cam member (34) is pivotally mounted on said output drive member (12) by a pin-and-socket connection (32,28).

10. A window wiper system (10) according to any one of claims 2 to 9, in which the pivotal connection between the eccentric cam member (34) and the sector link (50) is a pin-and-socket connection (38,52), and the resilient biasing means (70) is retained in position between the eccentric cam member (34) and the sector link (50) by means of a hammer drive screw (66) secured in the pin (38) of said pin-and-socket connection (38,52).

11. A window wiper system (10) according to any one of the preceding claims, in which the system is a rear window wiper system for use on a rear window of a motor vehicle.

Fig.1.

Fig.3.

Fig.4.

# Fig.2.

Fig.5c.

Fig.5 b

Fig.5a.

Fig.5f

Fig.5e.

Fig.5d.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 401 970 (GENERAL MOTORS)<br>* abstract; claim 1; figures 1-8 *<br>* column 1, line 1 - line 6 *<br>* column 1, line 47 - column 4, line 6 *<br>* column 4, line 44 - column 6, line 45 *<br>* column 7, line 46 - column 9, line 32 *<br>--- | 1,2 | B60S1/18<br>B60S1/58 |
| A | EP-A-0 188 226 (ASMO)<br>* abstract; figure 5 *<br>* page 3, line 22 - page 4, line 10 *<br>* page 13, line 8 - page 16, line 18 *<br>--- | 1,2 | |
| A | EP-A-0 188 306 (GENERAL MOTORS)<br>* abstract; claim 1; figures *<br>* page 2, line 11 - page 3, line 9 *<br>* page 5, line 5 - page 9, line 24 *<br><br>----- | 1 | |
| | | | TECHNICAL FIELDS SEARCHED (Int. Cl.5)<br><br>B60S |

The present search report has been drawn up for all claims

| Place of search | Date of completion of the search | Examiner |
|---|---|---|
| THE HAGUE | 12 AUGUST 1992 | WESTLAND P.G. |

EPO FORM 1503 03.82 (P0401)